# EUROPEAN PATENT SPECIFICATION

(11) **EP 2 391 579 B1**
(45) Date of publication and mention of the grant of the patent: **25.10.2017**
(21) Application number: 10736557.9
(22) Date of filing: 02.02.2010
(51) Int. Cl.: C09C 1/30, C09C 1/40, C09C 1/42, C09D 7/12, C09D 5/16, D06M 23/00

(54) **COMPOSITIONS OF SURFACE MODIFIED NANOPARTICLES**
ZUSAMMENSETZUNGEN AUS OBERFLÄCHENMODIFIZIERTEN NANOPARTIKELN
COMPOSITIONS DE NANOPARTICULES À SURFACE MODIFIÉE

(30) Priority: 02.02.2009 US 149160 P
(43) Date of publication of application: 07.12.2011
(73) Proprietor: INVISTA Textiles (U.K.) Limited, Manchester M2 3DE (GB)
(72) Inventor: IVERSON, Isaac, Keene, Columbia, GA 29229 (US); RUDAT, Martin, August, Woodstock, GA 30189-8188 (US)
(74) Representative: Cockerton, Bruce Roger
(86) International application number: PCT/US2010/022811
(87) International publication number: WO 2010/088643

(56) References cited:
- US-A- 5 429 873
- US-A- 5 454 979
- US-A- 5 801 092
- US-A1- 2004 209 072
- US-A1- 2006 147 705
- US-A1- 2008 015 298
- US-A1- 2009 004 462
- US-B1- 6 291 022
- US-B1- 6 299 981

## Description

### FIELD OF THE INVENTION

The invention relates to compositions of surface modified nanoparticles which are effective in treating soft and hard substrates to impart useful properties, including resistance to both water and oil. The invention also relates to aqueous dispersions of the surface modified nanoparticles, processes of making the composition and articles made with the compositions.

### BACKGROUND OF THE INVENTION

Many different compositions have been used, in varying degrees of success, to treat surfaces, fabrics and fibers to impart improved resistance to soil deposition and to exhibit water and oil repellency. However, those involving volatile organic compounds with the potential to be carried forward to the consumer are now to be avoided as much as possible, especially in carpet manufacturing. Excessive amounts of surfactant are also undesirable, because retention by treated substrates such as carpet results in increased affinity for soiling.

Fluorochemical resin emulsions have been used to create low soiling soft surfaces having water repellency as disclosed in US patent number 3,329,661. However, these materials are expensive and they are environmentally persistent. Therefore there is a need to reduce the overall usage of such compounds while retaining the highly valuable soil resistance and water repellency attributes they provide. Unfortunately, all of the conventional alternative compositions exhibit unsolved problems.

US patent number 6,225,403 to Knowlton, hereby fully incorporated herein, discloses the use of fabric surface treating compositions comprised of a blend of fluorochemical resins with colloidal sol dispersions of organosiloxane co-polymers. This blend allows for reduced add-on levels of fluorochemicals on soft-surfaces to achieve acceptable soil repellency. However, significant concentrations of fluorochemicals are still required to achieve the desired anti-soiling and hydrophobic effects and the apparent softness of treated articles can be adversely affected.

The production of more hydrophobic materials than siloxane typically involves fluorinated hydrocarbons, organic solvents and surfactants; and solvents such as ethanol, methanol, isopropanol, chloroform, and acetone are present as major components in both the creation and the stabilization of materials of this kind, such as fluoroalkyl modified silica particles. United States patents 5,801,092 and 6,045,962 disclose typical examples of such synthesis and dispersion. Solvent removal tends to be destabilizing to such dispersions, causing particles to precipitate or agglomerate, and once aggregated it is very difficult to disperse them effectively. Therefore the approaches described in the above disclosures are not suitable for creating a stable aqueous dispersion of particles without undesirably high concentrations of volatile organic solvents or surfactants.

United States patent application 2005/0227077 to Sugiyama discloses a process of making nanoparticles coated with cross-linked fluoropolymers suitable for molding material applications involving sequential steps of making fluoroalkylsilane modified silica in the presence of fluorosurfactants and water followed by the addition of unsaturated fluoropolymer monomers and polymerization into fluoropolymer coated particles. Sugiyama teaches that substantial concentrations of surfactant are required, both to disperse the inorganic particles prior to fluoroalkylation and to direct fluoropolymer monomers onto the silica particle surface. Fluorosurfactants are preferred, and concentrations higher than 10-20% of the weight of the reactant inorganic particles are deemed effective. Unfortunately, as indicated above, the high cost and environmental concerns related to fluorosurfactants make, the approach taught by Sugiyama unsuitable for application to manufacturing processes such as carpet fabric treatment.

United States patent 7,037,591 (Henze et al.) and United States patent application 20060292345 disclose another approach to create disperse hydrophobic siliceous nanoparticles which utilizes the sol-gel process wherein a silicate sol-gel precursor and a fluoroalkylsilane (FAS) reagent are mixed and co-condensed to produce particles. This approach is not favored where substantial quantities of material are involved because many of the expensive fluoroalkyl groups are incorporated into the particle structure and not presented to the surface of the nanoparticle where they can create a useful effect. Furthermore, the sol-gel co-condensation synthetic route still utilizes organic solvents with the same detrimental effects as outlined above.

### SUMMARY OF THE INVENTION

Therefore, a need exists for an improved composition for treating soft and hard substrates to impart softness and / or hydrophobic behavior, including soil and oil resistance. To that end, an improved surface modified fluoroalkylated nanoparticle is desired, wherein the fluoroalkyl groups are presented to the surface of the nanoparticle to create a useful hydrophobic effect and wherein both surfactants and volatile organic solvents are substantially absent from the composition to be applied to the substrate.

In accordance with one aspect of the disclosed composition, it has now been found that certain novel compositions can be produced comprising inorganic nanoparticles which have been surface modified via bi-phasic reaction with liquid fluoroalkylsilane (FAS) reagents in aqueous media. Aqueous dispersions of the disclosed composition are monophasic, optically transparent and stable without significant aggregation or precipitation and with little or no additional solvents or surfactants. The composition comprises: an aqueous dispersion of fluoroalkylsilyl surface modified nanoparticles, wherein the nanoparticles comprise at least one member selected from the group consisting of silica, titania, zirconia, layered magnesium silicate, aluminosilicate, natural clay, synthetic clay and mixtures thereof, and wherein the fluoroalkylsilyl is: (F(CF₂)ₙCH₂CH₂)ₘSi(O-)ₚ, where n is 2, 3 or 4, p is 1, 2 or 3, and m is (4-p). Also, the composition can further comprise an additional component moiety bonded to the surface of the nanoparticle having the formula: [H(CH₂)_{M}]ₙ-Si-(O-)ₚ, where M is an integer between 1 and 12, p is 1, 2, or 3, and n is 4-p. The additional component can be methylsilyl. Further, articles comprising the fluoroalkylsilyl surface modified nanoparticle are disclosed. The article can include fabrics, carpets, or paper. The article exhibits improved resistance to soil deposition, and both water and oil repellency.

In accordance with another aspect, a process of making an aqueous dispersion of fluoroaklysilyl surface modified nanoparticles is disclosed. The process comprises: (i) creating an aqueous dispersion of at least one member selected from the group consisting of silica, titania, zirconia, layered magnesium silicate, aluminosilicate, natural clay, synthetic clay and mixtures thereof; (ii) adding a water immiscible fluoroalkylsilane reagent to the aqueous dispersion to form a heterogeneous mixture where the fluoroalkylsilane reagent is: (F(CF₂)ₙCH₂CH₂)ₘSi(O-R)ₚ, where n is 2, 3 or 4, where p is 1, 2 or 3, where m is (4-p), and where R is selected from the group consisting of methyl, ethyl, n-propyl, isopropyl, n-butyl, isobutyl, and -C(O)CH₃; and (iii) mixing the heterogeneous mixture until it becomes a homogeneous aqueous dispersion of fluoroaklysilyl surface modified nanoparticles. Additionally, a component having the formula: [H(CH₂)_{M}]ₙ-Si-(X)ₚ, where M is an integer between 1 and 12, p is 1, 2, or 3, n is 4-p, and where X is selected from the group consisting of methoxy, ethoxy, propoxy, butoxy, acetoxy, and chloride leaving groups, can be added prior to the addition of the fluoroalkylsilane.

In yet another aspect, a modified substrate is disclosed. The modified substrate comprises a fluoroalkylsilyl surface modified nanoparticle on at least one surface of the substrate, wherein the nanoparticle comprises at least one member selected from the group consisting of titania, zirconia, layered magnesium silicate, aluminosilicate, natural clay, synthetic clay and mixtures thereof, and wherein the fluoroalkylsilyl is (F(CF₂)ₙCH₂CH₂)ₘSi(O-)ₚ, where n is 2, 3 or 4, where p is 1, 2 or 3, and where m is (4-p). The substrate can further comprise an additional component moiety bonded to the surface of the nanoparticle having the formula: [H(CH₂)_{M}]ₙ-Si-(O-)ₚ, where M is an integer between 1 and 12, p is 1, 2, or 3, and n is 4-p. When the substrate comprises the additional component moiety, the nanoparticle can be selected from the group consisting of silica, zirconia, titania, layered magnesium silicate, aluminosilicate, natural clay, synthetic clay and mixtures thereof. The substrate can be synthetic fiber, natural fiber, stone, ceramic, glass, plastic, and composites. Further, articles can be made from the substrates, including carpets, paper, and fabrics made from synthetic and natural fiber. The substrates and articles exhibit improved resistance to soil deposition, and both water and oil repellency.

In a further aspect, a process of making a substrate that is hydrophobic and soil resistant is disclosed. The process comprises (i) applying an aqueous dispersion of fluoroalkylsilyl surface modified nanoparticles to a substrate, wherein said aqueous dispersion comprises at least one member selected from the group consisting of silica, titania, zirconia, layered magnesium silicate, aluminosilicate, natural clay, synthetic clay and mixtures; and wherein said fluoroalkylsilyl is: (F(CF₂)ₙCH₂CH₂)ₘSi(O-)ₚ, where n is 2, 3 or 4, where p is 1, 2 or 3, and where m is (4-p); and (ii) drying the substrate. The aqueous dispersion of fluoroalkylsilyl surface modified nanoparticles can also comprise an additional component moiety bonded to the surface of the nanoparticle having the formula: [H(CH₂)_{M}]ₙ-Si-(O-)ₚ, where M is an integer between 1 and 12, p is 1, 2, or 3, and n is 4-p. The substrate can be synthetic fiber, natural fiber, stone, ceramic, glass, plastic, and composites.

In yet a further aspect, a composition comprising a surface modified nanoparticle is disclosed. The surface modified nanoparticle comprises a fluoroalkylsilyl having the formula: (F(CF₂)ₙCH₂CH₂)ₘSi(O-)ₚ, where n is 2, 3 or 4, where p is 1, 2 or 3, and where m is (4-p), wherein the nanoparticle is selected from the group consisting of zirconia, titania, layered magnesium silicate, aluminosilicate, natural clay, synthetic clay and mixtures thereof. The surface modified nanoparticle can optionally comprise an additional component moiety having the formula: [H(CH₂)_{M}]ₙ-Si-(O-)ₚ, where M is an integer between 1 and 12, p is 1, 2, or 3, and n is 4-p. When the surface modified nanoparticle comprises the additional component moiety, the nanoparticle can be selected from the group consisting of silica, zirconia, titania, layered magnesium silicate, aluminosilicate, natural clay, synthetic clay and mixtures thereof.

### DETAILED DESCRIPTION OF THE INVENTION

A composition for treating soft and hard substrates to impart softness and / or hydrophobic behavior, including soil and oil resistance is disclosed. The composition comprises a fluoroalkylated nanoparticle modified at the surface by reaction in water with a specific fluoroalkylsilane (FAS) reagent that is suited to conducting such a reaction efficiently in aqueous media. More specifically, the composition can comprise an aqueous dispersion of fluoroalkylsilyl surface modified nanoparticle, wherein the nanoparticle comprises at least one member selected from the group consisting of silica, titania, zirconia, layered magnesium silicate, aluminosilicate, natural clay, synthetic clay and mixtures thereof, and wherein the fluoroalkylsilyl is: (F(CF₂)ₙCH₂CH₂)ₘSi(O-)ₚ, where n is 2, 3 or 4, p is 1, 2 or 3, and m is (4-p), including: (F(CF₂)ₙCH₂CH₂)ₘSi(O-)ₚ, where n can be 4, p can be 3 when m is 1. The nanoparticle can comprise silica, titania, zirconia, layered magnesium silicates, aluminosilicates, clays and mixtures thereof, including a synthetic hectorite clay. A mixture can be synthetic hectorite clay and silica. The fluoroalkylsilyl moieties can be covalently bonded to the nanoparticle surface. This composition is formed by reaction of a water immiscible specific fluoroalkylsilane reagent emulsified in water with preformed inorganic nanoparticles dispersed in the aquaeous phase such that the fluoroalkylsilane reagent is covalently bonded to the nanoparticles predominantly at the particle surface as described in process above. This dispersion composition can then be applied to a substrate. The composition can optionally comprise a component moiety bonded to the surface of the nanoparticle having the formula: [H(CH₂)_{M}]ₙ-Si-(O-)ₚ, where M is an integer between 1 and 12, p is 1, 2, or 3, and n is 4-p. The optional component can be methylsilyl.

The nanoparticle can comprise silica, titania, zirconia, layered magnesium silicates, aluminosilicates, clays and mixtures thereof, for example the clay can be a synthetic hectorite clay, for example a mixture can be synthetic hectorite clay and silica. The fluoroalkylsilyl molecules can be covalently bonded to the nanoparticle surface.

The fluoroalkylsilyl surface modified nanoparticles can be present at a concentration in the range of from about 0.01% to about 50% by weight of the total composition of the dispersion, for example in the range of from about 1% to about 40% by weight, including about 1% to about 8% by weight of the total composition. Stable aqueous dispersions of fluoroalkylsilyl surface modified nanoparticles wherein the nanoparticles are synthetic hectorite clay can be formed at a concentration in the range of from about 0.01 % to about 12% by weight of the total composition, including about 1% to about 8% by weight of the total composition. Depending on the final use and the substrate to be treated, the dispersion of the present invention can be diluted for more efficient application or to control the level of moisture imparted in the treatment process. Again, depending on the nature of the substrate that is to be treated, its intended use and the process of manufacture, other chemistries as may be known in the art can be combined with the aqueous dispersion of the instant invention at suitable concentration ranges

The composition can further comprise a fluorinated resin emulsion, an alkylated inorganic nanoparticle having no fluorine and/or at least one member selected from the group consisting of a wetting agent, anti-soil agent, fluorochemical resin, surfactant and mixtures thereof.

Optionally, the composition can be blended with additional wetting agents, anti-soil agents, fluorochemical resins, surfactants or mixtures thereof, as known in the art, in order to simplify the manufacturing process at hand. While the aqueous dispersion is generally compatible, it is naturally desirable to avoid the addition of materials that would coalesce or precipitate the nanoparticles or otherwise diminish efficacy or utility.

The disclosed dispersions are surprisingly stable and exist indefinitely at moderately high concentrations as transparent aqueous mixtures in spite of the intrinsically hydrophobic nature of fluoroalkylated surfaces.

The compositions can be useful to treat soft surfaces to impart several valuable attributes. Hard surfaces, fabrics and fibers treated with the various dispersions described have also been shown to have increased resistance to soil deposition and to exhibit water and oil repellency

A process for making a fluoroalkysilyl surface modified nanoparticle is also disclosed. The process comprises: (i) creating an aqueous dispersion of at least one member selected from the group consisting of silica, titania, zirconia, layered magnesium silicate, aluminosilicate, natural clay, synthetic clay and mixtures thereof; (ii) adding a water immiscible fluoroalkylsilane reagent to the aqueous dispersion to form a heterogeneous mixture where the fluoroalkylsilane reagent is: (F(CF₂)ₙCH₂CH₂)ₘSi(OR)ₚ, where n is 2, 3 or 4, p is 1, 2 or 3, m is (4-p), and R is selected from the group consisting of methyl, ethyl, n-propyl, isopropyl, n-butyl, isobutyl, and -C(O)CH₃; and (iii) mixing the heterogeneous mixture until it becomes a homogeneous aqueous dispersion of fluoroaklysilane surface modified nanoparticles. The fluoroalkylsilane is: (F(CF₂)ₙCH₂CH₂)ₘSi(O-R)ₚ, where n can be 4, p can be 3 when m is 1 and R can be selected from the group consisting of methyl and ethyl. The nanoparticle can comprise silica, titania, zirconia, layered magnesium silicates, aluminosilicates, clays and mixtures thereof, for example the clay can be a synthetic hectorite clay, for example a mixture can be synthetic hectorite clay and silica. The fluoroalkylsilane molecules can be covalently bonded to the nanoparticle surface, creating a fluoroalkylsilyl moiety. The fluoroalkylsilyl surface modified nanoparticles can be formed at a concentration in the range of from about 0.01% to about 50% by weight of the total composition, for example from about 1% to about 40% by weight of the total composition or from about 1% to about 8% by weight of the total composition. The process can further comprise adding a fluorinated resin emulsion prior applying the aqueous dispersion. Additionally, the process can further comprise adding an alkylated inorganic nanoparticle having no fluorine prior applying the aqueous dispersion. Moreover, the process can further comprise adding at least one member selected from the group consisting of a wetting agent, anti-soil agent, fluorochemical resin, surfactant and mixtures thereof prior applying the aqueous dispersion. Optionally, a compound having the formula: [H(CH₂)_{M}]ₙSi-(X)ₚ, where M is an integer between 1 and 12, p is 1, 2, or 3, n is 4-p, and where X is selected from the group consisting of methoxy, ethoxy, propoxy, butoxy, acetoxy, and chloride leaving groups, can be added prior to the addition of the fluoroalkylsilane. A recirculation pump and static mixer may be used in the disclosed process to further increase the interfacial contact between the immiscible fluoroalkylsilane and nanoparticles.

The fluoroalkylsilane reactant used in step (ii) of the process to create the fluoroalkylsilyl surface modified nanoparticles is: (F(CF₂)ₙCH₂CH₂)ₘSi(O-R)ₚ, where n is 2, 3 or 4; where p is 1, 2 or 3; where (m + p) = 4; and where R is selected from the group consisting of methyl, ethyl, n-propyl, isopropyl, n-butyl, isobutyl, and -C(O)CH₃. The fluoroalkyl moiety of the alkylsilane reactant can be a perfluoroalkane of two to four carbons in length, for example a four carbon nanofluoroalkane (n is 4), where m is 1 and p is 3, and where R is either methyl or ethyl. Extended perfluoroalkane chains can be used to achieve greater degrees of hydrophobicity in treated substrates. However, FAS reagents having perfluoroalkane chains longer than four carbon atoms (n value greater than 4) are not suitable for making the disclosed aqueous dispersions and that the addition of undesirable levels of solvents or surfactants would be required to stabilize both reactants and product dispersions in the disclosed process.

In one aspect of the disclosed process, 1,1,2,2-tetrahydro-nonafluorohexyl trimethoxysilane can be added slowly with stirring to a 25%(w/w) aqueous dispersion of colloidal silica (20 nm particles) with pH 9 to form a liquid-liquid emulsion of cloudy appearance. Optionally, a recirculation pump and static mixer can be used with or without the mechanical stirrer to increase interfacial contact of the FAS with the colloidal silica. The FAS minor liquid phase is consumed with stirring over a period of hours gradually reducing to a single liquid phase dispersion that remains stable in the absence of stirring. The resulting stable aqueous dispersion contains dispersed silica nanoparticles that have a covalently bonded hydrophobic layer on the particle surface.

In another aspect of the disclosed process, 1,1,2,2-tetrahydro-nonafluorohexyl trimethoxysilane can be added slowly to a 5% (w/w) aqueous dispersion of synthetic hectorite clay nanoparticles sold by the trade name Laponite® RDS from Rockwood Additives Ltd. The aqueous hectorite clay dispersion is natively above pH 9 and slow addition of the FAS with high stir rate forms a liquid-liquid emulsion of cloudy appearance. Optionally, a recirculation pump and static mixer can be used with or without the mechanical stirrer to increase interfacial contact of the FAS with the hectorite clay. The FAS minor liquid phase is consumed with stirring over a period of hours gradually reducing to a single liquid phase dispersion that remains stable in the absence of stirring. Optionally, the dispersion of the present invention can be blended with fluorinated resin emulsions or with dispersions of alkylated inorganic nanoparticles having no fluorine. For example, the dispersions of the fluoroalkyl modified clay nanoparticles described above can be blended with an aqueous dispersion of colloidal silica nanoparticles which have been surface modified with methyltrimethyoxysilane (MTMS) so that the resulting aqueous dispersion comprises two distinctly different nanoparticles.

Also disclosed are substrates and processes for making the same using the fluoroalkylsilyl surface modified nanoparticles. The substrate comprises: a fluoroalkylsilyl surface modified nanoparticle on at least one surface, wherein the nanoparticle comprises at least one member selected from the group consisting of: titania, zirconia, layered magnesium silicate, aluminosilicate, natural clay, synthetic clay and mixtures thereof, and wherein the fluoroalkylsilyl is: (F(CF₂)ₙCH₂CH₂)ₘSi(O-)p, where n is 2, 3 or 4, p is 1, 2 or 3, and m is (4-p). The nanoparticle of the present invention can comprise titania, zirconia, layered magnesium silicates, aluminosilicates, clays and mixtures thereof, for example the clay can be a synthetic hectorite clay, for example a mixture can be synthetic hectorite clay and zirconia. The substrate can be selected from the group consisting of synthetic fiber, natural fiber, stone, ceramic, glass, plastic and composites. The fluoroalkylsilyl can also include: (F(CF₂)ₙCH₂CH₂)ₘSi(O-)ₚ, where n can be 4, p can be 3 when m is 1. The fluoroalkylsilyl can be covalently bonded to the nanoparticle surface. The substrate can have pores having an average diameter in the range of from about 100 to about 100,000 nanometers. The fluoroalkylsilane surface modified nanoparticle can form at least one layered structure on the substrate, wherein the layered structure has a thickness of about 10,000 nanometers or less, and a width and length of about 100,000 nanometers or more. The substrate can optionally comprise a component moiety bonded to the surface of the nanoparticle having the formula: [H(CH₂)_{M}]ₙ-Si-(O-)ₚ, where M is an integer between 1 and 12, p is 1, 2, or 3, and n is 4-p. When the nanoparticle comprises the optional component moiety, the nanoparticle can include silica, titania, zirconia, layered magnesium silicates, aluminosilicates, clays and mixtures thereof.

The substrate can be a polyamide fiber wherein the composition imparts dry soil, water, and oil repellency with lower levels of elemental fluorine used compared with coatings of traditional fluorochemical resin emulsions. Soft substrates coated with the present invention have been found to exhibit superior water repellency with less elemental fluorine than found in coatings of traditional fluorochemical resins. The substrate can also include synthetic fiber, natural fiber, stone, ceramic, glass, plastic and composites.

The process of making the substrate with the aqueous dispersion of nanoparticles comprises applying the aqueous dispersion of fluroralkylsilyl surface modified nanoparticles to a substrate; and drying the substrate.

Also disclosed are articles made from substrates comprising the fluoroalkylsilyl surface modified nanoparticles. More specifically, an article comprises a composition comprising: a fluoroalkylsilyl surface modified nanoparticle, wherein the nanoparticle comprises at least one member selected from the group consisting of titania, zirconia, layered magnesium silicate, aluminosilicate, natural clay, synthetic clay and mixtures thereof, and wherein the fluoroalkylsilyl is: (F(CF₂)ₙCH₂CH₂)ₘSi(O-)p, where n is 2, 3 or 4, p is 1, 2 or 3, and m is (4-p), and optionally a component moiety bonded to the surface of the nanoparticle having the formula: [H(CH₂)_{M}]ₙ-Si-(O-)ₚ, where M is an integer between 1 and 12, p is 1, 2, or 3, and n is 4-p. Articles can include but are not limited to fabrics, rugs, carpets, paper, stone, and finished or painted surfaces, for example fabric, carpet or paper, more particularly a fabric or a carpet. When the article is a fabric or carpet, or includes the optional component moiety, the nanoparticles can also include silica. For a fabric or a carpet, the total concentration of fluorine is in a range of from about 10 ppm to about 500 ppm w/w of exposed substrate, including about 50 ppm to about 300 ppm w/w of exposed substrate. For a fabric or a carpet, the substrate retains the fluoroalkylsilyl surface modified nanoparticle at a weight in the range of from about 0.01% to about 2.0% by weight of the exposed substrate, including from about 0.1% to about 1.0% by weight of the exposed substrate; or wherein the substrate retains elemental fluorine in the range of from about 0.0001% to about 0.10% by weight of the exposed substrate, including from about 0.0001% to about 0.010% by weight of the exposed substrate. For a fabric or a carpet, the substrate retains fluoroalkylsilyl surface modified nanoparticles in the range of from about 0.01 to about 3 grams per square meter of surface area, including from about 0.1 to about 2 grams per square meter of surface area. For carpets or fabrics, the aqueous dispersion can be applied from about 5 ounces per square yard of carpet or fabric to about 150 ounces per square yard of carpet or fabric.

### Definitions

Nanoparticle is defined as a multidimensional particle in which one of its dimensions is less than 100 nm in length.

FAS means the class of fluoroalkylsilane reagents used to impart fluorinated organic functionality including, but not limited to, the inorganic particles of this invention. FAS reagents specifically include, but are not limited to structures of the formula: (F(CF₂)ₙCH₂CH₂)ₘSi(OR)ₚ where n is 2, 3 or 4; where p is at least 1; where m is at least 1; where m + p = 4; and where R is methyl, ethyl, n-propyl, isopropyl, n-butyl, isobutyl, or -C(O)CH₃. Although less preferred for the process of making here disclosed, other structures having perflourinated alkyl terminal functionality should also be understood as being contemplated by this disclosure. FAS reagents can also include structures of the formula: (F(CF₂)ₙCH₂CH₂)ₘSi(X)ₚ where n is 2, 3 or 4; where p is at least 1; where m is at least 1; where m + p = 4; and where X is a halogen such as chlorine, bromine or iodine. FAS reagents can also include structures of the formula: (F(CF₂)ₙCH₂CH₂)ₘSiR'ₚ(X) where n> 2, and m + p = 3, R' is methyl or ethyl bonded to the silicon atom and where X is a halogen such as chlorine, bromine or iodine that is bonded to the silicon atom.

Clay particles can refer to particles substantially comprising minerals of the following geological classes: smectites, kaolins, illites, chlorites, and attapulgites. These classes include specific clays such as montmorillonite, bentonite, pyrophyllite, hectorite, saponite, sauconite, nontronite, talc, beidellite, volchonskoite, vermiculite, kaolinite, dickite, antigorite, anauxite, indellite, chrysotile, bravaisite, suscovite, paragonite, biotite, corrensite, penninite, donbassite, sudoite, pennine, sepiolite, and polygorskyte. The clay minerals of the invention may be either synthetic or natural and are exfoliated to be capable of forming aqueous micro dispersions. An example of one embodiment of the present invention uses synthetic hectorite clay nanoparticles sold by the trade name Laponite® from Rockwood Additives Ltd. Preferred embodiments of the present invention use Laponite RDS®, Laponite JS®, and Laponite RD®.

An aqueous dispersion means a colloidal dispersion, which is a system of finely divided particles of small size, such as nanoparticles, which are uniformly dispersed in a manner such that they are not easily filtered or gravitationally separated.

An aqueous micro dispersion is defined as a dispersion of particles predominately having at least one dimension that is less than about 100 nm in extent.

A non-solubilized aqueous micro dispersion is an aqueous micro dispersion that is stable for extended periods of time (two or more months) without water compatible surfactants.

OWF is weight per weight of fiber.

WPU (wet pick up) is the fraction of the weight of fabric added in liquid form in treating a fibrous substrate (w/w). For carpet, the weight of fabric is considered the carpet fiber face weight.

Layered structure is where overlap of nanoparticles is observed, and where flat layers or sheets are observed rather than round, globular or clumped aggregate structures.

### Test Methods

### Drum soiling procedure was followed as closely as possible from ASTM D6540

### Examples

**Aqueous Micro Dispersion Preparatory Example 1:** To a 250 mL round bottom flask was added 59.6 grams of 40% anionic colloidal silica (LUDOX® AS-40, from W.R. Grace) and 40.0 grams of de-ionized water with stirring to form a liquid-liquid emulsion of cloudy appearance. The pH of the resulting aqueous colloidal silica dispersion was between 9 and 10. The dispersion was stirred at 32°C under nitrogen and 1.798 mL of 1,1,2,2-tetrahydro-nonafluorohexyl trimethoxysilane (density = 1.335 g/mL, from Gelest) was added over 225 minutes via syringe and syringe pump. After stirring for 20 hrs at 32°C the mixture was observed to be a single liquid phase and was then allowed to cool to RT and a clear aqueous dispersion was produced. The product was filtered through 1 micron glass-fiber filter paper and the final concentration of the dispersion was essentially unchanged as only a very slight film of precipitate was observed on the filtration media.

**Aqueous Micro Dispersion Preparatory Example 2:** To a 500 mL round bottom flask was added 190 grams of de-ionized water and the temperature was brought to 38 deg C with rapid stirring. 10.00 gram of Laponite® RDS clay powder (from Rockwood Additives) was added slowly over 15 minutes in small increments and then stirred for 1 hr at 38°C, creating a clear aqueous dispersion with a pH of between 9 and 10. The temperature of the Laponite® RDS dispersion was brought to 32°C while stirring under nitrogen and 2.757 mL of 1,1,2,2-tetrahydro-nonafluorohexyl trimethoxysilane (density = 1.335 g/mL, from Gelest) was added over 336 minutes via syringe and syringe pump with stirring to form a liquid-liquid emulsion of cloudy appearance. After addition, the dispersion was stirred for 35 hrs at 32°C and was observed to be a single liquid phase. It was then allowed to cool to RT and a clear aqueous dispersion was produced. The product was filtered through 1 micron glass-fiber filter paper and the final concentration of the dispersion was essentially unchanged as only a very slight film of precipitate was observed on the filtration media.

**Aqueous Micro Dispersion Preparatory Example 3:** To a 3000 mL round bottom flask with 3 necks and equipped with overhead stirrer was added 596 grams of 40% anionic colloidal silica (LUDOX® AS-40, from W.R. Grace) and 396 grams of de-ionized water at room temperature with stirring. The pH of the resulting aqueous dispersion was between 9 and 10. The dispersion was brought to 30°C and stirred under nitrogen, and 13.20 mL of methyl trimethoxysilane (density = 0.955 g/mL, from Aldrich) was subsequently added over 127 minutes via syringe and syringe pump. After stirring for 1 hr at 30°C it was allowed to cool to RT and a clear aqueous dispersion was produced. The product was filtered through 1 micron glass-fiber filter paper and the final concentration of the dispersion was essentially unchanged at approximately 25% w/w solids, as only a very slight film of precipitate was observed on the filtration media.

**Aqueous Micro Dispersion Preparatory Example 4:** To a small beaker was added 59.6 grams of 40% anionic colloidal silica (LUDOX® AS-40 from W.R. Grace) and 40.4 grams of de-ionized water at room temperature with stirring, to produce a solution with 25% solids. 0.744 ml of methyltrimethylsiloxane (MTMS) was dripped into the stirring beaker using a syringe pump set to deliver 0.01 ml/min. Approximately 135 minutes after addition of MTMS (i.e. about 1 hour after it ended), the FAS addition started. 0.360 ml of FAS was added at 0.01 ml/min, using a 1 ml glass Hamilton gas-tight syringe. The beaker was covered in parafilm and stirred at 1200 rpm for approximately 48 hours. During the 48 hour stirring, a sludge formed that trapped the stir bar. No oil droplets were visible on the top of the liquid surface. The product was filtered through GFA paper, whereby 97 grams of product was collected.

**Aqueous Micro Dispersion Preparatory Example 5:** In a 15 liter reactor, 2380 grams of deionized water and 3580 grams of 40% anionic colloidal silica (LUDOX® AS-40 from W.R. Grace) was added to produce a solution with 25% solids. In addition to mechanical stirring, the reactor was fitted with a recirculating pump and tubing drawing the solution through the pump and then through a static mixer tube and then back to the reactor. 24.5 grams of MTMS was added dropwise to the solution over 5 minutes. The solution was allowed to mix for 1 hour. 66.45 grams of FAS was slowly added via glass funnel over 1.5 hours. After 4 hours of mixing, most of the FAS oily phase had disappeared from the water surface indicating a single phase and that the FAS had reacted with the particles. The solution was allowed to stand overnight and was filtered through GFA glass filer paper. Approximately 12 grams of unreacted byproduct was collected. The resulting aqueous dispersion was stable and homogeneous. Upon allowing drops of the dispersion to evaporate on the surface, a surprising hydrophobic film is formed, which is substantially more hydrophobic than comparable amounts of fluorine from Capstone® RCP (DuPont) or from a treated Ludox® with 100% FAS monolayer (Preparatory Example 1).

**Substrate Treatment Example 1:** The stable aqueous dispersion from Preparatory Example 1 was diluted with 82.4 grams of water and the resulting solution sprayed on 46 ounce cut-pile carpet at 5% WPU and curing in 150°C oven for 6 min resulted in the OWF totals for particle solids and fluorine as listed in Table 1. The results of the dry soiling test (ASTM D6540) are also provided therein.

**Substrate Treatment Examples 2:** 58.8 grams of the stable aqueous dispersion from Preparatory Example 2 was blended with 7.9 grams of the aqueous dispersion from Preparatory Example 3 and then diluted with 33.3 grams of water at room temperature and the resulting solution sprayed on 46 ounce cut-pile carpet at 4.9% WPU. Drying in a 150°C oven for 6 min gave ppm OWF totals for particle solids and fluorine listed in Table 1. The results of the dry soiling test (ASTM D6540) are also provided therein.

**Substrate Treatment Example 3:** 57.6 grams of the stable aqueous dispersion from Preparatory Example 2 was blended with 1.2 grams of the aqueous dispersion from Preparatory Example 3 and then diluted with 41.2 grams of DI water at room temperature and the resulting solution was sprayed on 46 ounce cut-pile carpet at 4.9% WPU. Drying in a 150°C oven for 6 min gave ppm OWF totals for particle solids and fluorine listed in Table 1. The results of the dry soiling test (ASTM D6540) are also provided therein.

**Substrate Treatment Example 4:** 39.6 grams of the stable aqueous dispersion from Preparatory Example 2 was blended with 4.0 grams of the aqueous dispersion from Preparatory Example 3 and then diluted with 56.4 grams of DI water at room temperature and the resulting solution was sprayed on 46 ounce cut-pile carpet at 4.9% WPU. Drying in a 150°C oven for 6 min gave ppm OWF totals for particle solids and fluorine listed in Table 1. The results of the dry soiling test (ASTM D6540) are also provided therein.

**Substrate Treatment Example 5**: 8.8 grams of the stable aqueous dispersion from Preparatory Example 1 was blended with 4.8 grams of Capstone®RCP (a commercial fluoro-resin aqueous emulsion from DuPont) and then diluted with 86.4 grams of DI water at Room Temperature. The resulting solution was sprayed on 46 ounce cut-pile carpet at 6.4% WPU. Drying in a 150°C oven for 6 min gave ppm OWF totals for particle solids and fluorine listed in Table 1. The results of the dry soiling test (ASTM D6540) are also provided therein.

**Substrate Treatment Example 6:** 7.9 grams of the stable aqueous dispersion from Preparatory Example 1 was blended with 4.3 grams of the aqueous dispersion from Preparatory Example 3 and then diluted with 87.8 grams of DI water at Room Temperature. The resulting solution was sprayed on 46 ounce cut-pile carpet at 5.1 % WPU. Drying in a 150°C oven for 6 min gave ppm OWF totals for particle solids and fluorine listed in Table 1. The results of the dry soiling test (ASTM D6540) are also provided therein.

**Substrate Treatment Example 7:** 0.8 grams of the stable aqueous dispersion from Preparatory Example 4 was blended with 8.2 grams of S801 stain resist from INVISTA North America S.a.r.l. The concentrated solution was diluted with de-ionized water by a factor of 56.87 to obtain a total solution weight equal to 250% of the fiber weight for the carpet specimen to be treated. Diluted sulfamic acid was added to bring the pH to 1.5. The bottle was inverted to mix thoroughly, and then the solution was poured into a tray. The carpet was placed in the liquid with the fiber facing down to soak it up. The carpet was rolled from one edge and squeezed to disperse liquid. The carpet was placed back into the tray to soak up any squeezed out liquid. The roll and squeeze technique was repeated from the other three sides. The carpet was placed fiber facing upwards on the conveyor belt of the steam table, with the steam valve open part-way, the speed set to 10 (10 sec / 1 inch), and the heater set to 100°C. After the carpet specimen passed through the oven, it was sent through the steam/oven again with the fiber facing down. The steamed carpet was rinsed in water, extracted with the vacuum of a Hot Water Extraction device and air dried overnight. The treated specimen was backed with duct tape and labeled prior to testing.

**Substrate Treatment Example 8:** 0.8 grams of the stable aqueous dispersion from Preparatory Example 5 was blended with 0.36 grams of Capstone®RCP and 8.77 grams of S801 stain resist from INVISTA North America S.a.r.l. The concentrated solution was diluted with de-ionized water by a factor of 54.8 to obtain a total solution weight equal to 250% of the fiber weight for the carpet specimen to be treated. Diluted Sulfamic Acid was added to bring the pH to 1.5. The bottle was inverted to mix thoroughly, and then the solution was poured into a tray. The carpet was placed in the liquid with the fiber facing down to soak it up. The carpet was rolled from one edge and squeezed to disperse liquid. The carpet was placed back into the tray to soak up any squeezed out liquid. The roll and squeeze technique was repeated from the other three sides. The carpet was placed fiber facing upwards on the conveyor belt of the steam table, with the steam valve open part-way, the speed set to 10 (10 sec / 1 inch), and the heater set to 100°C. After the carpet specimen passed through the oven, it was sent through the steam/oven again with the fiber facing down. The steamed carpet was rinsed in water, extracted with the vacuum of a Hot Water Extraction device and air dried overnight. The treated specimen was backed with duct tape and labeled prior to testing.

**Substrate Treatment Example 9:** 2.0 grams of the stable aqueous dispersion from Preparatory Example 5 was blended with 8.0 grams of S801 stain resist. The concentrated solution was diluted with de-ionized water by a factor of 50 to obtain a total solution weight equal to 250% of the fiber weight for the carpet specimen to be treated. Diluted Sulfamic Acid was added to bring the pH to 1.5. The bottle was inverted to mix thoroughly, and then the solution was poured into a tray. The carpet was placed in the liquid with the fiber facing down to soak it up. The carpet was rolled from one edge and squeezed to disperse liquid. The carpet was placed back into the tray to soak up any squeezed out liquid. The roll and squeeze technique was repeated from the other three sides. The carpet was placed fiber facing upwards on the conveyor belt of the steam table, with the steam valve open part-way, the speed set to 10 (10 sec / 1 inch), and the heater set to 100°C. After the carpet specimen passed through the oven, it was sent through the steam/oven again with the fiber facing down. The steamed carpet was rinsed in water, extracted with the vacuum of a Hot Water Extraction device and air dried overnight. The treated specimen was backed with duct tape and labeled prior to testing.

**Comparative Example 1:** As an industry standard benchmark for residential carpet anti-soil treatments, 13.3 grams of Capstone® RCP solution (a commercial fluoro-resin aqueous emulsion from DuPont) was diluted with 86.7 grams of water and the resulting solution was sprayed on 46 ounce cut-pile carpet at 9.2% WPU and curing in 150°C oven for 6 min gave 610 ppm fluorine OWF. Table 1 indicates the results of the dry soiling test (ASTM D6540) for comparison to embodiments of the inventive examples.

**Table 1. Summary of examples**

| **sample ID** | **nanoparticle dispersion** | **ppm OWF surface modified nanoparticles (total)** | **total ppm fluorine (OWF)** | **ppm fluorine from optional blending with Capstone™ RCP** | **Delta E** | **Std Dev** | **Untreated Control dE (measured simulateous)** | **Control Std Dev** | **% soil retained vs control** |
|---|---|---|---|---|---|---|---|---|---|
| Example 1 (136142a) | FAS modified silica | 2190 | 100 | 0 | 15.7 | 1.7 | 21.9 | 0.8 | 71 |
| Example 2 (255038a) | FAS modified Laponite ® RDS+ MTMS modified Silica | 2430 | 250 | 0 | 11.1 | 0.8 | 20.2 | 0.7 | 55 |
| Example 3 (255038b) | FAS modified Laponite ® RDS+ MTMS modified Silica | 1560 | 240 | 0 | 12.7 | 0.7 | 20.2 | 0.7 | 63 |
| Example 4 (255038d) | FAS modified Laponite ® RDS + MTMS modified Silica | 1460 | 170 | 0 | 12.9 | 0.7 | 20.2 | 0.7 | 64 |
| Example 5 (136142e) | FAS modified silica + Capstone RCP™ | 1410 | 220 | 150 | 14.5 | 0.7 | 21.9 | 0.8 | 66 |
| Example 6 (255027d) | FAS modified silica + Capstone RCP™ | 1050 | 150 | 110 | 17.8 | 0.2 | 24.9 | 0.5 | 71 |
| Comparative Example 1 (136154) | Capstone RCP™ | 0 | 610 | 610 | 14.8 | 0.5 | 20.6 | 0.7 | 72 |

## Claims

1. A composition comprising an aqueous dispersion of fluoroalkylsilyl surface modified nanoparticles, wherein the nanoparticles comprise at least one member selected from the group consisting of titania, zirconia, layered magnesium silicate, alumino silicate, natural clay, synthetic clay and mixtures thereof, and wherein the fluoroalkylsilyl is:
(F(CF₂)ₙCH₂CH₂)ₘSi(O-)ₚ,
where n is 2, 3 or 4,
where p is 1, 2 or 3, and
where m is (4-p).

2. A process for making fluoroaklysilyl surface modified nanoparticles, comprising:
(i) creating an aqueous dispersion of at least one member selected from the group consisting of silica, titania, zirconia, layered magnesium silicate, aluminosilicate, natural clay, synthetic clay and mixtures thereof;
(ii) adding a water immiscible fluoroalkylsilane reagent to the aqueous dispersion to form a heterogeneous mixture where the fluoroalkylsilane reagent is:
(F(CF₂)ₙCH₂CH₂)ₘSi(O-R)ₚ,
where n is 2, 3 or 4,
where p is 1, 2 or 3,
where m is (4-p), and
where R is selected from the group consisting of methyl, ethyl, n-propyl, isopropyl, n-butyl, isobutyl, and -C(O)CH₃; and
(iii) mixing the heterogeneous mixture until it becomes a homogeneous aqueous dispersion of fluoroaklysilyl surface modified nanoparticles.

3. The process of claim 2 wherein n is 4, p is 3, m is 1, R is selected from the group consisting of methyl and ethyl, and the synthetic clay is a hectorite clay.

4. A modified substrate comprising:
a fluoroalkylsilyl surface modified nanoparticle on at least one surface of said substrate, wherein the nanoparticle comprises at least one member selected from the group consisting of titania, zirconia, layered magnesium silicate, aluminosilicate, natural clay, synthetic clay and mixtures thereof, and
wherein the fluoroalkylsilyl is:
(F(CF₂)ₙCH₂CH₂)ₘSi(O-)ₚ,
where n is 2, 3 or 4,
where p is 1, 2 or 3, and
where m is (4-p)

5. The modified substrate of claim 4 wherein said substrate is selected from the group consisting of synthetic fiber, natural fiber, stone, ceramic, glass, plastic and composites.

6. A process for making a modified substrate that is hydrophobic and soil resistant, comprising:
(i) applying an aqueous dispersion of fluoroalkylsilyl surface modified nanoparticles, wherein said nanoparticles comprises at least one member selected from the group consisting of silica, titania, zirconia, layered magnesium silicate, aluminosilicate, natural clay, synthetic clay and mixtures thereof; and wherein said fluoroalkylsilyl is:
(F(CF₂)ₙCH₂CH₂)ₘSi(O-)ₚ,
where n is 2, 3 or 4,
where p is 1, 2 or 3, and
where m is (4-p); and
(ii) drying the substrate.

7. The process of claim 6 wherein n is 4, p is 3, m is 1, and the synthetic clay is a hectorite clay.

8. The composition of claim 1 or the modified substrate of claim 4 wherein n is 4.

9. The composition of claim 1 or the modified substrate of claim 4 wherein p is 3 and m is 1.

10. The composition of claim 1 or the modified substrate of claim 9 wherein the synthetic clay is hectorite clay.

11. The composition of claim 1 or the modified substrate of claim 9, or the process of claim 6 or 7, wherein the fluoroalkylsilyl is covalently bonded to the nanoparticle surface.

12. The composition of claim 1 wherein the fluoroalkylsilyl surface modified nanoparticle is present at a concentration in the range of from about 0.01% to about 50% by weight of the total composition; or
at a concentration in the range of from about 1% to about 40% by weight of the total composition; or
at a concentration in the range of from about 1% to about 8% by weight of the total composition.

13. The composition of any of claims 1 and 8-12 further comprising, or the process of claims 2 or 3 further comprising adding, or the process of claims 6 or 7 wherein said aqueous dispersion further comprises, a fluorinated resin emulsion.

14. The composition of any of claims 1 and 8-13 further comprising, or the process of claims 2 or 3 further comprising adding, or the process of claims 6 or 7 wherein said aqueous dispersion further comprises, an alkylated inorganic nanoparticle having no fluorine.

15. The composition of any of claims 1 and 8-13 further comprising, or the process of claims 2 or 3 further comprising adding, or the process of claims 6 or 7 wherein said aqueous dispersion further comprises, at least one member selected from the group consisting of a wetting agent, anti-soil agent, anti-stain agent, fluorochemical resin, surfactant and mixtures thereof.

16. The composition of any of claims 1 and 8-12 further comprising, or the process of claims 6 or 7 wherein said aqueous dispersion further comprises, a component moiety bonded to the surface of the nanoparticles having the formula:
[H(CH₂)_{M}]ₙ-Si-(O-)ₚ.
where M is an integer between 1 and 12,
where p is 1,2, or 3, and
where n is 4-p.

17. The process of claim 2 or 3 wherein the fluoroalkylsilane molecules are covalently bonded to the nanoparticle surface, forming flouroalkylsilyl moiety on the surface of the nanoparticle.

18. The process of claim 2 or 3 or the process of claims 6 or 7 wherein the fluoroalkylsilyl surface modified nanoparticles are formed at a concentration in the range of from about 0.01% to about 50% by weight of the aqueous dispersion; or
at a concentration in the range of from about 1% to about 40% by weight of the aqueous dispersion; or
at a concentration in the range of from about 1% to about 8% by weight of the aqueous dispersion.

19. The process of claim 2 or 3, further comprising adding a component prior to the addition of the fluoroalkylsilane, wherein said component has the formula:
[H(CH₂)_{M}]ₙ-Si-(X)ₚ.
where M is an integer between 1 and 12,
where p is 1,2, or 3,
where n is 4-p, and
where X is selected from the group consisting of methoxy, ethoxy, propoxy, butoxy, acetoxy, and chloride leaving groups.

20. The process of claim 19, wherein said mixing further comprises recirculating the fluoroalkylsilane and nanoparticles through a static mixer.

21. The modified substrate of claim 4 or 5 wherein the substrate comprises pores having an average diameter in the range of from about 100 to about 100,000 nanometers.

22. The modified substrate of claim 4 or 5 wherein the fluoroalkylsilyl surface modified nanoparticle forms at least one layered structure on the substrate, wherein the layered structure has a thickness of about 10,000 nanometers or less, and a width and length of about 100,000 nanometers or more.

23. The modified substrate of claim 4, wherein the substrate further comprises a component moiety bonded to the surface of the nanoparticle having the formula:
[H(CH₂)_{M}]ₙ-Si-(O-)ₚ.
where M is an integer between 1 and 12,
where p is 1,2, or 3, and
where n is 4-p; and further wherein said nanoparticle comprises at least one member selected from the group consisting of silica, titania, zirconia, layered magnesium silicate, alumino silicate, natural clay, synthetic clay and mixtures thereof.

24. An article made from the substrate of claim 4 or 23.

25. The article of claim 24 wherein the article is a fabric, carpet, or paper.

26. The article of claim 25 wherein the article is a fabric or a carpet, and further
wherein said nanoparticle comprises at least one member selected from the group consisting of silica, titania, zirconia, layered magnesium silicate, alumino silicate, natural clay, synthetic clay and mixtures thereof.

27. The article of claim 26 wherein the total concentration of fluorine on the external surface is in a range of from about 10 ppm to about 500 ppm w/w; or
in a range of from about 50 ppm to about 300 ppm w/w.

28. The article of claim 26 wherein the fluoroalkylsilyl surface modified nanoparticle is present from about 0.01% to about 2.0% by weight of the article; or
wherein the fluoroalkylsilyl surface modified nanoparticle is present from about 0.1% to about 1.0% by weight of the article.

29. The article of claim 26 wherein elemental fluorine is present from about 0.0001 % to about 0.10% by weight of the article; or
wherein elemental fluorine is present from about 0.0001% to about 0.010% by weight of the article.

30. The article of claim 26 wherein the fluoroalkylsilyl surface modified nanoparticles is present from about 0.01 to about 3 grams per square meter of surface area of the article; or
from about 0.1 to about 2 grams per square meter of surface area of the article.

31. The process of claim 6 or 7, wherein said substrate is selected from the group consisting of synthetic fiber, natural fiber, stone, ceramic, glass, plastic and composites.

32. A composition comprising:
a surface modified nanoparticle comprising: (1) a fluoroalkylsilyl having the following formula:
(F(CF₂)ₙCH₂CH₂)ₘSi(O-)ₚ,
where n is 2, 3 or 4,
where p is 1, 2 or 3, and
where m is (4-p), and (2) a component moiety having the formula:
[H(CH₂)_{M}]ₙ-Si-(O-)ₚ.
where M is an integer between 1 and 12,
where p is 1,2, or 3, and
where n is 4-p; wherein the nanoparticle comprises at least one member selected from the group consisting of silica, titania, zirconia, layered magnesium silicate, alumino silicate, natural clay, synthetic clay and mixtures thereof.

33. A composition comprising:
a fluoroalkylsilyl surface modified nanoparticle, wherein the nanoparticle comprises at least one member selected from the group consisting of titania, zirconia, layered magnesium silicate, aluminosilicate, natural clay, synthetic clay and mixtures thereof, and wherein the fluoroalkylsilyl is:
(F(CF₂)ₙCH₂CH₂)ₘSi(O-)ₚ,
where n is 2, 3 or 4,
where p is 1, 2 or 3, and
where m is (4-p).

## Patentansprüche

1. Zusammensetzung, umfassend eine wässrige Dispersion von mit Fluoralkylsilyl oberflächenmodifizierten Nanopartikeln, wobei die Nanopartikel mindestens ein Mitglied umfassen, das ausgewählt ist aus der Gruppe bestehend aus Titandioxid, Zirkonoxid, geschichtetem Magnesiumsilikat, Aluminosilikat, natürlichem Ton, synthetischem Ton und Gemischen davon, und wobei das Fluoralkylsilyl:
(F(CF₂)ₙCH₂CH₂)ₘSi(O-)ₚ,
ist,
wobei n für 2, 3 oder 4 steht,
wobei p für 1, 2 oder 3 steht und
wobei m für (4-p) steht.

2. Verfahren zur Herstellung von mit Fluoralkylsilyl oberflächenmodifizierten Nanopartikeln, umfassend:
(i) Erzeugen einer wässrigen Dispersion von mindestens einem Mitglied, ausgewählt aus der Gruppe bestehend aus Siliciumdioxid, Titandioxid, Zirkonoxid, geschichtetem Magnesiumsilikat, Aluminosilikat, natürlichem Ton, synthetischem Ton und Gemischen davon;
(ii) Zugabe eines mit Wasser nicht mischbaren Fluoralkylsilanreagenzes zu der wässrigen Dispersion, so dass ein heterogenes Gemisch gebildet wird, wobei das Fluoralkylsilanreagenz:
(F(CF₂)ₙCH₂CH₂)ₘSi(O-R)ₚ,
ist,
wobei n für 2, 3 oder 4 steht,
wobei p für 1, 2 oder 3 steht,
wobei m für (4-p) steht und
wobei R ausgewählt ist aus der Gruppe bestehend aus Methyl, Ethyl, n-Propyl, Isopropyl, n-Butyl, Isobutyl und -C(O)CH₃; und
(iii) Mischen des heterogenen Gemischs, bis es eine homogene wässrige Dispersion von mit Fluoralkylsilyl oberflächenmodifizierten Nanopartikeln wird.

3. Verfahren nach Anspruch 2, wobei n für 4 steht, p für 3 steht, m für 1 steht, R ausgewählt ist aus der Gruppe bestehend aus Methyl und Ethyl und der synthetische Ton ein Hectorit-Ton ist.

4. Modifiziertes Substrat, umfassend:
ein mit Fluoralkylsilyl oberflächenmodifiziertes Nanopartikel auf mindestens einer Oberfläche des Substrats, wobei das Nanopartikel mindestens ein Mitglied umfasst, das ausgewählt ist aus der Gruppe bestehend aus Titandioxid, Zirkonoxid, geschichtetem Magnesiumsilikat, Aluminosilikat, natürlichem Ton, synthetischem Ton und Gemischen davon, und wobei das Fluoralkylsilyl:
(F(CF₂)ₙCH₂CH₂)ₘSi(O-)ₚ
ist,
wobei n für 2, 3 oder 4 steht,
wobei p für 1, 2 oder 3 steht und
wobei m für (4-p) steht.

5. Modifiziertes Substrat nach Anspruch 4, wobei das Substrat ausgewählt ist aus der Gruppe, bestehend aus Synthetikfaser, Naturfaser, Stein, Keramik, Glas, Kunststoff und Verbundwerkstoffen.

6. Verfahren zur Herstellung eines modifizierten Substrats, das hydrophob und schmutzabweisend ist, umfassend:
(i) Aufbringen einer wässrigen Dispersion von mit Fluoralkylsilyl oberflächenmodifizierten Nanopartikeln, wobei die Nanopartikel mindestens ein Mitglied umfassen, das ausgewählt ist aus der Gruppe bestehend aus Siliciumdioxid, Titandioxid, Zirkonoxid, geschichtetem Magnesiumsilikat, Aluminosilikat, natürlichem Ton, synthetischem Ton und Gemischen davon; und wobei das Fluoralkylsilyl:
(F(CF₂)ₙCH₂CH₂)ₘSi(O-)ₚ
ist,
wobei n für 2, 3 oder 4 steht,
wobei p für 1, 2 oder 3 steht und
wobei m für (4-p) steht; und
(ii) Trocknen des Substrats.

7. Verfahren nach Anspruch 6, wobei n für 4 steht, p für 3 steht, m für 1 steht und der synthetische Ton ein Hectorit-Ton ist.

8. Zusammensetzung nach Anspruch 1 oder modifiziertes Substrat nach Anspruch 4, wobei n für 4 steht.

9. Zusammensetzung nach Anspruch 1 oder modifiziertes Substrat nach Anspruch 4, wobei p für 3 steht und m für 1 steht.

10. Zusammensetzung nach Anspruch 1 oder modifiziertes Substrat nach Anspruch 9, wobei der synthetische Ton Hectorit-Ton ist.

11. Zusammensetzung nach Anspruch 1 oder modifiziertes Substrat nach Anspruch 9 oder Verfahren nach Anspruch 6 oder 7, wobei das Fluoralkylsilyl kovalent an die Nanopartikeloberfläche gebunden ist.

12. Zusammensetzung nach Anspruch 1, wobei das mit Fluoralkylsilyl oberflächenmodifizierte Nanopartikel in einer Konzentration im Bereich von etwa 0,01 Gew.-% bis etwa 50 Gew.-% der Gesamtzusammensetzung; oder
in einer Konzentration im Bereich von etwa 1 Gew.-% bis etwa 40 Gew.-% der Gesamtzusammensetzung; oder
in einer Konzentration im Bereich von etwa 1 Gew.-% bis etwa 8 Gew.-% der Gesamtzusammensetzung vorliegt.

13. Zusammensetzung nach einem der Ansprüche 1 und 8 bis 12, zudem umfassend, oder Verfahren nach den Ansprüchen 2 oder 3, zudem umfassend das Zugeben, oder Verfahren nach den Ansprüchen 6 oder 7, wobei die wässrige Dispersion zudem eine fluorierte Harzemulsion umfasst.

14. Zusammensetzung nach einem der Ansprüche 1 und 8 bis 13, zudem umfassend, oder Verfahren nach den Ansprüchen 2 oder 3, zudem umfassend das Zugeben, oder Verfahren nach den Ansprüchen 6 oder 7, wobei die wässrige Dispersion zudem ein alkyliertes anorganisches Nanopartikel ohne Fluor umfasst.

15. Zusammensetzung nach einem der Ansprüche 1 und 8 bis 13, zudem umfassend, oder Verfahren nach den Ansprüchen 2 oder 3, zudem umfassend das Zugeben, oder Verfahren nach den Ansprüchen 6 oder 7, wobei die wässrige Dispersion zudem mindestens ein Mitglied umfasst, das ausgewählt ist aus der Gruppe, bestehend aus einem Netzmittel, einem schmutzabweisenden Mittel, einem Antifärbemittel, einem fluorchemischen Harz, einem oberflächenaktiven Mittel und Gemischen davon.

16. Zusammensetzung nach einem der Ansprüche 1 und 8 bis 12, zudem umfassend, oder Verfahren nach den Ansprüchen 6 oder 7, wobei die wässrige Dispersion zudem eine Komponenteneinheit umfasst, die an die Oberfläche der Nanopartikel mit der Formel:
[H(CH₂)_{M}]ₙ-Si-(O-)ₚ
gebunden ist,
wobei M für eine ganze Zahl zwischen 1 und 12 steht,
wobei p für 1, 2 oder 3 steht und
wobei n für 4-p steht.

17. Verfahren nach Anspruch 2 oder 3, wobei die Fluoralkylsilanmoleküle kovalent an die Nanopartikeloberfläche gebunden sind und eine Fluoralkylsilylgruppe auf der Oberfläche des Nanopartikels bilden.

18. Verfahren nach Anspruch 2 oder 3 oder Verfahren nach den Ansprüchen 6 oder 7, wobei die mit Fluoralkylsilyl oberflächenmodifizierten Nanopartikel in einer Konzentration im Bereich von etwa 0,01 Gew.-% bis etwa 50 Gew.-% der wässrigen Dispersion; oder
in einer Konzentration im Bereich von etwa 1 Gew.-% bis etwa 40 Gew.-% der wässrigen Dispersion; oder
in einer Konzentration im Bereich von etwa 1 Gew.-% bis etwa 8 Gew.-% der wässrigen Dispersion gebildet werden.

19. Verfahren nach Anspruch 2 oder 3, zudem umfassend das Zugeben einer Komponente vor der Zugabe des Fluoralkylsilans, wobei die Komponente die Formel:
[H(CH₂)_{M}]ₙ-Si-(X)ₚ
aufweist,
wobei M für eine ganze Zahl zwischen 1 und 12 steht, wobei p für 1, 2 oder 3 steht,
wobei n für 4-p steht und
wobei X ausgewählt ist aus der Gruppe bestehend aus Methoxy-, Ethoxy-, Propoxy-, Butoxy-, Acetoxy- und Chlorid-Abgangsgruppen.

20. Verfahren nach Anspruch 19, wobei das Mischen zudem das Rezirkulieren des Fluoralkylsilans und der Nanopartikel durch einen statischen Mischer umfasst.

21. Modifiziertes Substrat nach Anspruch 4 oder 5, wobei das Substrat Poren mit einem mittleren Durchmesser im Bereich von etwa 100 bis etwa 100000 Nanometern aufweist.

22. Modifiziertes Substrat nach Anspruch 4 oder 5, wobei das mit Fluoralkylsilyl oberflächenmodifizierte Nanopartikel mindestens eine Schichtstruktur auf dem Substrat bildet, wobei die Schichtstruktur eine Dicke von etwa 10000 Nanometern oder weniger und eine Breite und Länge von etwa 100000 Nanometern oder mehr aufweist.

23. Modifiziertes Substrat nach Anspruch 4, wobei das Substrat zudem einen an die Oberfläche des Nanopartikels gebundenen Komponentenanteil mit der Formel:
[H(CH₂)_{M}]ₙ-Si-(O-)ₚ
umfasst,
wobei M für eine ganze Zahl zwischen 1 und 12 steht,
wobei p für 1, 2 oder 3 steht und
wobei n für 4-p steht; und
wobei zudem das Nanopartikel mindestens ein Mitglied umfasst, das ausgewählt ist aus der Gruppe, bestehend aus Siliciumdioxid, Titandioxid, Zirkonoxid, geschichtetem Magnesiumsilikat, Aluminosilikat, natürlichem Ton, synthetischem Ton und Gemischen davon.

24. Gegenstand, der aus dem Substrat nach Anspruch 4 oder 23 hergestellt ist.

25. Gegenstand nach Anspruch 24, wobei der Gegenstand ein Gewebe, ein Teppich oder ein Papier ist.

26. Gegenstand nach Anspruch 25, wobei der Gegenstand ein Gewebe oder ein Teppich ist und wobei zudem das Nanopartikel mindestens ein Mitglied umfasst, das ausgewählt ist aus der Gruppe, bestehend aus Siliciumdioxid, Titandioxid, Zirkonoxid, geschichtetem Magnesiumsilikat, Aluminosilikat, natürlichem Ton, synthetischem Ton und Gemischen davon.

27. Gegenstand nach Anspruch 26, wobei die Gesamtkonzentration an Fluor auf der äußeren Oberfläche in einem Bereich von etwa 10 ppm bis etwa 500 ppm w/w; oder
in einem Bereich von etwa 50 ppm bis etwa 300 ppm w/w liegt.

28. Gegenstand nach Anspruch 26, wobei das mit Fluoralkylsilyl oberflächenmodifizierte Nanopartikel von etwa 0,01 Gew.-% bis etwa 2,0 Gew.-% des Gegenstands vorliegt; oder
wobei das mit Fluoralkylsilyl oberflächenmodifizierte Nanopartikel von etwa 0,1 Gew.-% bis etwa 1,0 Gew.-% des Gegenstands vorliegt.

29. Gegenstand nach Anspruch 26, wobei elementares Fluor von etwa 0,0001 Gew.-% bis etwa 0,10 Gew.-% des Gegenstands vorliegt; oder
wobei elementares Fluor von etwa 0,0001 Gew.-% bis etwa 0,010 Gew.-% des Gegenstands vorliegt.

30. Gegenstand nach Anspruch 26, wobei die mit Fluoralkylsilyl oberflächenmodifizierten Nanopartikel von etwa 0,01 bis etwa 3 g pro Quadratmeter Oberfläche des Gegenstandes; oder
von etwa 0,1 bis etwa 2 g pro Quadratmeter Oberfläche des Gegenstandes vorliegen.

31. Verfahren nach Anspruch 6 oder 7, wobei das Substrat ausgewählt ist aus der Gruppe, bestehend aus Synthetikfaser, Naturfaser, Stein, Keramik, Glas, Kunststoff und Verbundwerkstoffen.

32. Zusammensetzung, umfassend:
ein oberflächenmodifiziertes Nanopartikel, umfassend: (1) ein Fluoralkylsilyl mit der folgenden Formel:
(F(CF₂)ₙCH₂CH₂)ₘSi(O-)ₚ,
wobei n für 2, 3 oder 4 steht,
wobei p für 1, 2 oder 3 steht, und
wobei m für (4-p) steht, und (2) eine Komponenteneinheit mit der Formel:
[H(CH₂)_{M}]ₙ-Si-(O-)ₚ,
wobei M für eine ganze Zahl zwischen 1 und 12 steht,
wobei p für 1, 2 oder 3 steht und
wobei n für 4-p steht; und
wobei zudem das Nanopartikel mindestens ein Mitglied umfasst, das ausgewählt ist aus der Gruppe, bestehend aus Siliciumdioxid, Titandioxid, Zirkonoxid, geschichtetem Magnesiumsilikat, Aluminosilikat, natürlichem Ton, synthetischem Ton und Gemischen davon.

33. Zusammensetzung, umfassend:
ein mit Fluoralkylsilyl oberflächenmodifiziertes Nanopartikel, wobei das Nanopartikel mindestens ein Mitglied umfasst, ausgewählt aus der Gruppe bestehend aus Titandioxid, Zirkonoxid, geschichtetem Magnesiumsilikat, Aluminosilikat, natürlichem Ton, synthetischem Ton und Gemischen davon, und wobei das Fluoralkylsilyl:
(F(CF₂)ₙCH₂CH₂)ₘSi(O-)ₚ
ist,
wobei n für 2, 3 oder 4 steht,
wobei p für 1, 2 oder 3 steht und
wobei m für (4-p) steht.

## Revendications

1. Composition comprenant une dispersion aqueuse de nanoparticules modifiées en surface par fluoroalkylsilyle, dans laquelle les nanoparticules comprennent au moins un élément choisi dans le groupe constitué par le dioxyde de titane, la zircone, le phyllosilicate de magnésium, un aluminosilicate, une argile naturelle, une argile synthétique et les mélanges de ceux-ci et dans laquelle le fluoroalkylsilyle est :
(F(CF₂)ₙCH₂CH₂)ₘSi(O-)ₚ,
n valant 2, 3 ou 4,
p valant 1, 2 ou 3 et
m valant (4-p).

2. Procédé pour la fabrication de nanoparticules modifiées en surface par fluoroalkylsilyle, comprenant :
(i) la création d'une dispersion aqueuse d'au moins un élément choisi dans le groupe constitué par la silice, le dioxyde de titane, la zircone, le phyllosilicate de magnésium, un aluminosilicate, une argile naturelle, une argile synthétique et les mélanges de ceux-ci ;
(ii) l'ajout d'un réactif fluoroalkylsilane non miscible avec l'eau à la dispersion aqueuse pour former un mélange hétérogène, le réactif fluoroalkylsilane étant :
(F(CF₂)ₙCH₂CH₂)ₘSi(O-R)ₚ,
n valant 2, 3 ou 4,
p valant 1, 2 ou 3,
m valant (4-p) et
R étant choisi dans le groupe constitué par les groupes méthyle, éthyle, *n*-propyle, isopropyle, *n*-butyle, isobutyle et -C(O)CH₃ ; et
(iii) le mélange du mélange hétérogène jusqu'à ce qu'il devienne une dispersion aqueuse homogène de nanoparticules modifiées en surface par fluoroalkylsilyle.

3. Procédé selon la revendication 2 dans lequel n vaut 4, p vaut 3, m vaut 1, R est choisi dans le groupe constitué par les groupes méthyle et éthyle et l'argile synthétique est une argile hectorite.

4. Substrat modifié comprenant :
une nanoparticule modifiée en surface par fluoroalkylsilyle sur au moins une surface dudit substrat, dans lequel la nanoparticule comprend au moins un élément choisi dans le groupe constitué par le dioxyde de titane, la zircone, le phyllosilicate de magnésium, un aluminosilicate, une argile naturelle, une argile synthétique et les mélanges de ceux-ci et dans lequel le fluoroalkylsilyle est :
(F(CF₂)ₙCH₂CH₂)ₘSi(O-)ₚ,
n valant 2, 3 ou 4,
p valant 1, 2 ou 3 et
m valant (4-p).

5. Substrat modifié selon la revendication 4 dans lequel ledit substrat est choisi dans le groupe constitué par une fibre synthétique, une fibre naturelle, de la pierre, de la céramique, du verre, du plastique et des composites.

6. Procédé pour la fabrication d'un substrat modifié qui est hydrophobe et résistant à la salissure, comprenant :
(i) l'application d'une dispersion aqueuse de nanoparticules modifiées en surface par fluoroalkylsilyle, dans laquelle lesdites nanoparticules comprennent au moins un élément choisi dans le groupe constitué par la silice, le dioxyde de titane, la zircone, le phyllosilicate de magnésium, un aluminosilicate, une argile naturelle, une argile synthétique et les mélanges de ceux-ci ; et dans laquelle ledit fluoroalkylsilyle est :
(F(CF₂)ₙCH₂CH₂)ₘSi(O-)ₚ,
n valant 2, 3 ou 4,
p valant 1, 2 ou 3 et
m valant (4-p) ; et
(ii) le séchage du substrat.

7. Procédé selon la revendication 6 dans lequel n vaut 4, p vaut 3, m vaut 1 et l'argile synthétique est une argile hectorite.

8. Composition selon la revendication 1 ou substrat modifié selon la revendication 4 dans lesquels n vaut 4.

9. Composition selon la revendication 1 ou substrat modifié selon la revendication 4 dans lesquels p vaut 3 et m vaut 1.

10. Composition selon la revendication 1 ou substrat modifié selon la revendication 9 dans lesquels l'argile synthétique est l'argile hectorite.

11. Composition selon la revendication 1 ou substrat modifié selon la revendication 9 ou procédé selon la revendication 6 ou 7, dans lesquels le fluoroalkyle est lié de façon covalente à la surface de la nanoparticule.

12. Composition selon la revendication 1 dans laquelle la nanoparticule modifiée en surface par fluoroalkylsilyle est présente en une concentration dans la plage d'environ 0,01 % à environ 50 % en poids de la composition totale ; ou
en une concentration dans la plage d'environ 1 % à environ 40 % en poids de la composition totale ; ou
en une concentration dans la plage d'environ 1 % à environ 8 % en poids de la composition totale.

13. Composition selon l'une quelconque des revendications 1 et 8-12 comprenant en outre une émulsion de résine fluorée ou procédé selon les revendications 2 ou 3 comprenant en outre l'ajout d'une émulsion de résine fluorée ou procédé selon les revendications 6 ou 7 dans lequel ladite dispersion aqueuse comprend en outre une émulsion de résine fluorée.

14. Composition selon l'une quelconque des revendications 1 et 8-13 comprenant en outre une nanoparticule inorganique alkylée n'ayant pas de fluor ou procédé selon les revendications 2 ou 3 comprenant en outre l'ajout d'une nanoparticule inorganique alkylée n'ayant pas de fluor ou procédé selon les revendications 6 ou 7 dans lequel ladite dispersion aqueuse comprend en outre une nanoparticule inorganique alkylée n'ayant pas de fluor.

15. Composition selon l'une quelconque des revendications 1 et 8-13 comprenant en outre au moins un élément choisi dans le groupe constitué par un agent mouillant, un agent antisalissure, un agent antitache, une résine de produit chimique fluoré, un tensioactif et les mélanges de ceux-ci ou procédé selon les revendications 2 ou 3 comprenant en outre l'ajout d'au moins un élément choisi dans le groupe constitué par un agent mouillant, un agent antisalissure, un agent antitache, une résine de produit chimique fluoré, un tensioactif et les mélanges de ceux-ci celui-ci ou procédé selon les revendications 6 ou 7 dans lequel ladite dispersion aqueuse comprend en outre au moins un élément choisi dans le groupe constitué par un agent mouillant, un agent antisalissure, un agent antitache, une résine de produit chimique fluoré, un tensioactif et les mélanges de ceux-ci.

16. Composition selon l'une quelconque des revendications 1 et 8-12 comprenant en outre une fraction de constituant liée à la surface des nanoparticules répondant à la formule :
[H(CH₂)_{M}]ₙ-Si-(O-)ₚ,
ou procédé selon les revendications 6 ou 7 dans lequel ladite dispersion aqueuse comprend en outre une fraction de constituant liée à la surface des nanoparticules répondant à la formule :
[H(CH₂)_{M}]ₙ-Si-(O-)ₚ,
M étant un nombre entier compris entre 1 et 12,
p valant 1, 2 ou 3 et
n valant 4-p.

17. Procédé selon la revendication 2 ou 3 dans lequel les molécules de fluoroalkylsilane sont liées de façon covalente à la surface de la nanoparticule, ce qui forme une fraction fluoroalkylsilyle sur la surface de la nanoparticule.

18. Procédé selon la revendication 2 ou 3 ou procédé selon les revendications 6 ou 7 dans lesquels les nanoparticules modifiées en surface par fluoroalkylsilyle sont formées en une concentration dans la plage d'environ 0,01 % à environ 50 % en poids de la dispersion aqueuse ; ou
en une concentration dans la plage d'environ 1 % à environ 40 % en poids de la dispersion aqueuse ; ou
en une concentration dans la plage d'environ 1 % à environ 8 % en poids de la dispersion aqueuse.

19. Procédé selon la revendication 2 ou 3, comprenant en outre l'ajout d'un constituant avant l'ajout du fluoroalkylsilane, dans lequel ledit constituant répond à la formule :
[H(CH₂)_{M}]ₙ-Si-(X)ₚ,
M étant un nombre entier compris entre 1 et 12,
p valant 1, 2 ou 3,
n valant 4-p et
X étant choisi dans le groupe constitué par les groupes partants méthoxy, éthoxy, propoxy, butoxy, acétoxy et chlorure.

20. Procédé selon la revendication 19, dans lequel ledit mélange comprend en outre la recirculation du fluoroalkylsilane et des nanoparticules en passant par un mélangeur statique.

21. Substrat modifié selon la revendication 4 ou 5 dans lequel le substrat comprend des pores ayant un diamètre moyen dans la plage d'environ 100 à environ 100 000 nanomètres.

22. Substrat modifié selon la revendication 4 ou 5 dans lequel la nanoparticule modifiée en surface par fluoroalkylsilyle forme au moins une structure en couche sur le substrat, dans lequel la structure en couche a une épaisseur inférieure ou égale à environ 10 000 nanomètres et une largeur et une longueur supérieures ou égales à environ 100 000 nanomètres.

23. Substrat modifié selon la revendication 4, dans lequel le substrat comprend en outre une fraction de constituant liée à la surface de la nanoparticule répondant à la formule :
[H(CH₂)_{M}]ₙ-Si-(O-)ₚ,
M étant un nombre entier compris entre 1 et 12,
p valant 1, 2 ou 3 et
n valant 4-p ;
et en outre dans lequel ladite nanoparticule comprend au moins un élément choisi dans le groupe constitué par la silice, le dioxyde de titane, la zircone, le phyllosilicate de magnésium, un aluminosilicate, une argile naturelle, une argile synthétique et les mélanges de ceux-ci.

24. Article fabriqué à partir du substrat selon la revendication 4 ou 23.

25. Article selon la revendication 24, l'article étant un tissu, un tapis ou du papier.

26. Article selon la revendication 25, l'article étant un tissu ou un tapis et en outre dans lequel ladite nanoparticule comprend au moins un élément choisi dans le groupe constitué par la silice, le dioxyde de titane, la zircone, le phyllosilicate de magnésium, un aluminosilicate, une argile naturelle, une argile synthétique et les mélanges de ceux-ci.

27. Article selon la revendication 26 dans lequel la concentration totale du fluor sur la surface externe est dans une plage d'environ 10 ppm à environ 500 ppm p/p ; ou
dans une plage d'environ 50 ppm à environ 300 ppm p/p.

28. Article selon la revendication 26 dans lequel la nanoparticule modifiée en surface par fluoroalkylsilyle est présente à hauteur d'environ 0,01 % à environ 2,0 % en poids de l'article ; ou
dans lequel la nanoparticule modifiée en surface par fluoroalkylsilyle est présente à hauteur d'environ 0,1 % à environ 1,0 % en poids de l'article.

29. Article selon la revendication 26 dans lequel du fluor élémentaire est présent à hauteur d'environ 0,0001 % à environ 0,10 % en poids de l'article ; ou
dans lequel du fluor élémentaire est présent à hauteur d'environ 0,0001 % à environ 0,010 % en poids de l'article.

30. Article selon la revendication 26 dans lequel les nanoparticules modifiées en surface par fluoroalkylsilyle sont présentes à hauteur d'environ 0,01 à environ 3 grammes par mètre carré de surface de l'article ; ou
d'environ 0,1 à environ 2 grammes par mètre carré de surface de l'article.

31. Procédé selon la revendication 6 ou 7, dans lequel ledit substrat est choisi dans le groupe constitué par une fibre synthétique, une fibre naturelle, de la pierre, de la céramique, du verre, du plastique et des composites.

32. Composition comprenant :
une nanoparticule modifiée en surface comprenant :
(1) un fluoroalkylsilyle répondant à la formule suivante :
(F(CF₂)ₙCH₂CH₂)ₘSi(O-)ₚ,
n valant 2, 3 ou 4,
p valant 1, 2 ou 3 et
m valant (4-p), et
(2) une fraction de constituant répondant à la formule :
[H(CH₂)_{M}]ₙ-Si-(O-)ₚ,
M étant un nombre entier compris entre 1 et 12,
p valant 1, 2 ou 3 et
n valant 4-p ;
dans laquelle la nanoparticule comprend au moins un élément choisi dans le groupe constitué par la silice, le dioxyde de titane, la zircone, le phyllosilicate de magnésium, un aluminosilicate, une argile naturelle, une argile synthétique et les mélanges de ceux-ci.

33. Composition comprenant :
une nanoparticule modifiée en surface par fluoroalkylsilyle,
dans laquelle la nanoparticule comprend au moins un élément choisi dans le groupe constitué par le dioxyde de titane, la zircone, le phyllosilicate de magnésium, un aluminosilicate, une argile naturelle, une argile synthétique et les mélanges de ceux-ci et dans laquelle le fluoroalkylsilyle est :
(F(CF₂)ₙCH₂CH₂)ₘSi(O-)ₚ,
n valant 2, 3 ou 4,
p valant 1, 2 ou 3 et
m valant (4-p).
